# EUROPÄISCHE PATENTANMELDUNG

(11) **EP 3 543 502 A1**
(43) Veröffentlichungstag der Anmeldung: **25.09.2019**
(21) Anmeldenummer: 18162803.3
(22) Anmeldetag: 20.03.2018
(51) Int. Cl.: F02B 43/10, F02M 25/12, F02M 37/00

(54) **HEIZSYSTEM FÜR EIN SCHIFF UND VERFAHREN ZUM BETREIBEN DESSELBEN**

(71) Anmelder: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(57) **Zusammenfassung**

Ein Schiffsheizsystem umfasst mindestens einen Heizkessel (40) und mindestens einen Brennstofftank (44) zum Versorgen des Heizkessels (40) mit Brennstoff. Zudem ist eine Elektrolyseeinrichtung (20) zum Erzeugen von Wasserstoffgas und Sauerstoffgas vorgesehen, welche mit einem Verbrennungsmotor (10a, 10b) eines Schiffsantriebssystems verbunden ist und außerdem mit dem Heizkessel (40) verbunden ist.

## Beschreibung

Die vorliegende Erfindung betrifft ein Schiffsheizsystem nach dem Oberbegriff des Anspruchs 1 und ein Verfahren zum Betreiben eines Schiffsheizsystems nach dem Oberbegriff des Anspruchs 11.

Ein gattungsgemäßes Schiffsheizsystem umfasst mindestens einen Heizkessel und einen Brennstofftank zum Versorgen des Heizkessels mit Brennstoff, beispielsweise Schweröl, Marine-Dieselöl, Gasöl oder Gas.

Analog umfasst ein gattungsgemäßes Verfahren zum Betreiben eines Schiffsheizsystems die Schritte, dass ein Brennstoff aus einem Brennstofftank mindestens einem Heizkessel zugeführt und dort verbrannt wird.

Für einen energieeffizienten Betrieb wird auf Schiffen zum Beheizen von Betriebsmitteln (Fuels) und Räumen auch Abwärme des Antriebssystems genutzt. Durch die Verbrennungsmotoren der Haupt- und Hilfsmaschinen entsteht eine beträchtliche Wärmeenergie, die abhängig von der aktuellen Auslastung der Haupt- und Hilfsmaschinen vollständig ausreichen kann, um genügend Wärme zur Schiffsbeheizung zu liefern. Dies kann insbesondere bei einem Volllastbetrieb der Fall sein, womit der Heizkessel vorübergehend nicht benötigt wird.

Gerade aber in den Häfen, wenn die Hauptmaschine(n) nicht arbeiten, entsteht nur wenig Abwärme. In diesem Fall ist der Heizkessel zum Beheizen des Schiffs erforderlich.

Bei typischerweise verwendeten Heizkesseln entstehen beim Verbrennungsprozess verhältnismäßig große Mengen an Schadstoffen und Ruß. Durch Rußablagerungen verschlechtern sich Betriebseigenschaften des Heizkessels. Dadurch werden Heizkessel häufig größer ausgelegt als eigentlich erforderlich, um auch noch trotz Rußablagerungen genügend Heizleistung zu liefern. Auch aus Umweltsicht wäre ein saubererer Verbrennungsvorgang wünschenswert.

Prinzipiell ist es bekannt, geeignete Additive dem Verbrennungsvorgang zuzugeben, um die Rußentstehung zu reduzieren und eine vollständigere Verbrennung zu erzielen. Allerdings führen hohe Sicherheitsvorschriften auf Schiffen dazu, dass leicht entflammbare Additive nur mit kostenintensiven Schutzmaßnahmen genutzt werden können. Die hieraus resultierenden Mehrkosten erlassen solche Maßnahmen finanziell unattraktiv erscheinen. Dieser Umstand wird noch dadurch gesteigert, dass je nach Schiffsart aufgrund der Abwärmenutzung der Hauptmaschinen die Heizkessel nur zeitlich begrenzt eingesetzt werden.

Als eine **Aufgabe** der Erfindung kann angesehen werden, ein besonders effizientes und umweltfreundliches Schiffsheizsystem und Verfahren zum Betreiben desselben anzugeben.

Diese Aufgabe wird durch das Schiffsheizsystem mit den Merkmalen des Anspruchs 1 und das Verfahren mit den Merkmalen des Anspruchs 11 gelöst.

Vorteilhafte Varianten des erfindungsgemäßen Schiffsheizsystems und des erfindungsgemäßen Verfahrens sind Gegenstand der abhängigen Ansprüche und werden außerdem in der folgenden Beschreibung erläutert.

Bei dem eingangs genannten Schiffsheizsystem ist erfindungsgemäß eine Elektrolyseeinrichtung zum Erzeugen von Wasserstoffgas und Sauerstoffgas vorgesehen und mit einem Verbrennungsmotor eines Schiffsantriebssystems verbunden. Die Elektrolyseeinrichtung ist außerdem mit dem Heizkessel verbunden zum Zuführen von Wasserstoffgas und Sauerstoffgas zum Heizkessel. In analoger Weise umfasst das oben genannte Verfahren zum Betreiben eines Schiffsheizsystems erfindungsgemäß die Schritte, dass Wasserstoffgas und Sauerstoffgas mit einer Elektrolyseeinrichtung erzeugt und sowohl einem Verbrennungsmotor eines Schiffsantriebssystems als auch dem Heizkessel zugeführt werden.

Für die Erfindung wird genutzt, dass bei modernen, besonders effizienten Schiffsantriebssystemen, wie sie beispielsweise von der Anmelderin in EP 3124781 B1 beschrieben sind, eine Elektrolyseeinrichtung zur Optimierung des Verbrennungsprozesses der Antriebsmaschine des Schiffs verwendet wird. Hier werden elektrolytisch erzeugtes Wasserstoff- und Sauerstoffgas dem Brennprozess beigegeben, bei dem wie üblich als hauptsächlicher Treibstoff Schweröl, Marine-Dieselöl, Gasöl oder Gas verwendet wird. Für die Haupt- oder Hilfsmaschinen, die ständig in Betrieb sind und große Mengen Treibstoff verbrennen, lohnt sich die Installation einer Elektrolyseeinrichtung auch unter dem Gesichtspunkt, dass wegen hoher Sicherheitsanforderungen auf Schiffen die Elektrolyseeinheit und hiermit verbundene Komponenten explosionssicher und dadurch verhältnismäßig kostspielig gestaltet sein müssen. Für einen Heizkessel allein würde sich ein solcher Aufwand kaum lohnen. Allerdings kann die Elektrolyseeinrichtung, die ohnehin für eine Haupt- und/oder Hilfsmaschine genutzt wird, auch für den Heizkessel mitgenutzt werden. Dieser Vorteil kommt besonders stark zu tragen, weil ein Heizkessel in der Regel dann benutzt wird, wenn die Haupt- und Hilfsmaschinen nur mit geringer Leistung oder überhaupt nicht laufen und demnach auch nicht die gesamte von der Elektrolyseeinrichtung produzierbare Menge an Wasserstoff- und Sauerstoffgas benötigen. Daher muss eine Elektrolyseeinrichtung in der Regel nicht größer ausgelegt werden, um zusätzlich zur Haupt- und/oder Hilfsmaschine auch den Heizkessel mitzuversorgen. Vorteilhafterweise verursacht daher die erfindungsgemäße Zufuhr der Elektrolysegase zum Heizkessel kaum Mehrkosten gegenüber bekannten Systemen, wobei aber der Verbrennungsprozess des Heizkessels vorteilhaft beeinflusst wird. Insbesondere entsteht weniger Ruß, der Heizkessel kann länger effizient arbeiten und kann dadurch kleiner und kostengünstiger gestaltet werden. Die Verbrennung erfolgt vollständiger und erzeugt weniger Schadstoffe.

Eine elektronische Steuereinheit kann vorgesehen und dazu eingerichtet sein, variabel einzustellen, wieviel erzeugtes Wasserstoffgas und Sauerstoffgas dem Verbrennungsmotor zugeführt wird und wieviel erzeugtes Wasserstoffgas und Sauerstoffgas dem Heizkessel zugeführt wird. In dieser Weise kann ein- und dieselbe Elektrolyseeinrichtung variabel genutzt werden.

Die Steuereinheit kann eine Datenschnittstelle zum Empfangen eines Brennstoffsignals umfassen, welches angibt, was für ein Brennstoff dem Heizkessel momentan zugeführt wird. Beispielsweise kann das Brennstoffsignal angeben, ob momentan Schweröl, Marine-Dieselöl, Gasöl oder Gas zugeführt wird. Je nach Art des Brennstoffs ist für eine möglichst saubere Verbrennung, beispielsweise zur Minimierung der Rußentstehung, eine andere Menge an Wasserstoff- und Sauerstoffgas ideal. Daher kann die Steuereinheit abhängig vom Brennstoffsignal variabel einstellen, wie viel Wasserstoff- und Sauerstoffgas dem Heizkessel zugeführt wird. Hierzu kann die Steuereinheit die Elektrolyseeinrichtung entsprechend steuern. Alternativ oder ergänzend kann die Steuereinheit über ihre Datenschnittstelle auch ein Heizleistungssignal empfangen, welches eine momentane Heizleistung des Heizkessels angibt. Das Heizleistungssignal kann prinzipiell jede Größe sein, die einen Rückschluss auf die Heizleistung zulässt, beispielsweise kann die Menge an zugeführtem Brennstoff pro Zeiteinheit, eine Heizkesseltemperatur oder eine Pumpeigenschaft einer mit dem Heizkessel verbundenen Pumpe zur Wärmeabfuhr vom Heizkessel als Heizleistungssignal genutzt werden. Die Steuereinheit kann abhängig vom Heizleistungssignal die Mengen an zugeführtem Wasserstoff- und Sauerstoffgas variabel einstellen.

Bei einer kosteneffizienten Gestaltung der Elektrolyseeinrichtung werden Wasserstoff- und Sauerstoffgas gemeinsam als Knallgas ausgegeben. Dies kann relevante Kostenvorteile aufgrund der hohen Sicherheitsanforderungen an die Rohrleitungen in explosionsgeschützten Bereichen auf Schiffen bedeuten, was später näher beschrieben wird. Alternativ kann die Elektrolyseeinrichtung aber auch so gestaltet sein, dass erzeugtes Sauerstoffgas und erzeugtes Wasserstoffgas in separaten Leitungen ausgegeben werden. Diese Leitungen führen beide zum Heizkessel und werden daher nachfolgend als Heizkessel-Leitungen bezeichnet. Als ein Vorteil kann die Steuereinheit nun ein Verhältnis zwischen einer dem Heizkessel zugeführten Menge an Sauerstoffgas zu einer dem Heizkessel zugeführten Menge an Wasserstoffgas variabel einstellen. Insbesondere kann das Verhältnis von Wasserstoff- zu Sauerstoffgas auch abhängig vom Brennstoffsignal oder Heizleistungssignal variiert werden.

Aufgrund der leichten Entzündbarkeit der genannten Elektrolysegase müssen Pumpen, die zum Befördern hiervon eingesetzt werden, erhöhte Sicherheitserfordernisse erfüllen, womit höhere Kosten verbunden sind. Um dies zu vermeiden, kann die Elektrolyseeinrichtung oder ihre Zellen als Druckkammer gebildet sein, also als ein geschlossener Behälter, in dem die erzeugten Elektrolysegase den Druck erhöhen. Die Elektrolyseeinrichtung kann mindestens ein Regelventil umfassen, welches eine Verbindung zum Heizkessel nur öffnet, wenn ein Druck in der Elektrolyseeinrichtung einen einstellbaren Öffnungsdruck überschreitet. In dieser Weise können das Wasserstoffgas und Sauerstoffgas allein durch den in der Elektrolyseeinrichtung erzeugten Druck, ohne zusätzliche Pumpe, zum Heizkessel befördert werden.

Ebenso kann durch die Gestaltung als Druckkammer mit Regelventil auf eine Pumpe zum Befördern der Elektrolysegase zum Verbrennungsmotor verzichtet werden. Eine Elektrolysegas-Leitung kann die Elektrolysegase insbesondere einem Druckbereich hinter einem Verdichter eines Turboladers in einem Ansaugtrakt des Verbrennungsmotors einleiten.

Während die Höhe des Öffnungsdrucks des Regelventils für die Zufuhr zum Heizkessel nur eine untergeordnete Rolle spielt, ist der Öffnungsdruck für die Zufuhr zum Verbrennungsmotor besonders relevant. So kann die Steuereinheit den Öffnungsdruck des Regelventils stets auf einen Druck einstellen, welcher einen momentanen Ladeluftdruck im Druckbereich hinter dem Verdichter um einen vorgebbaren Mindestwert überschreitet. In dieser Weise kann sichergestellt werden, dass im aktuellen Betrieb das Wasserstoffgas und Sauerstoffgas allein durch den in der Elektrolyseeinrichtung erzeugten Druck in den Druckbereich hinter dem Verdichter befördert werden.

Sollen mehrere Verbrennungsmotoren mit den Elektrolysegasen versorgt werden, kann es sein, dass die zugehörigen Turbolader unterschiedliche Ladedrücke erzeugen. Für diesen Fall kann die Steuereinheit den Öffnungsdruck des Regelventils abhängig vom höchsten der Ladedrücke einstellen, so dass der Öffnungsdruck auch gegenüber dem höchsten Ladedruck um einen vorgegebenen Mindestwert größer ist. Eine Elektrolysegas-Leitung kann sich stromabwärts vom Regelventil zu den Druckbereichen der mehreren Verbrennungsmotoren teilen und jeweils eine einstellbare Drosselung aufweisen, durch welche ein Druck der Elektrolysegase auf einen zum jeweiligen Ladedruck geeigneten Wert reduziert werden kann. Ergänzend oder alternativ kann auch in der Heizkessel-Leitung eine (einstellbare) Drosselung vorgesehen sein, da für eine Einleitung in den Heizkessel in der Regel ein geringerer Druck geeignet ist als für die Einleitung der Elektrolysegase in den Ansaugtrakt des Verbrennungsmotors.

Durch die Zugabe der Elektrolysegase und eventueller weiterer Zusatzstoffe, wie Alkohol und Wasser, hinter dem Turbolader wird im Vergleich zu einer Zugabe vor dem Turbolader die Sicherheit erhöht: Im Fall eines Flammenrückschlags aus dem Brennraum können sich diese Zusatzstoffe entzünden und die Flamme breitet sich aus. Werden die Zusatzstoffe erst auf der Druckseite des Turboladers hinzugegeben, ist es unwahrscheinlich, dass sich Flammen über den Verdichter des Turboladers hinaus ausbreiten. Bei einer Einleitung vorm Turbolader könnten sich Flammen hingegen über den Verdichter hinaus bis in einen umgebenden Maschinenraum ausbreiten, welcher zum Ansaugen von Frischluft nicht durch eine feste Wand abgeschirmt ist. Ein weiterer Sicherheitsvorteil resultiert daraus, dass beim Abstellen des Verbrennungsmotors praktisch kein entzündliches Gas im Ansaugtrakt verbleibt, weil weitestgehend alle im Druckbereich des Ansaugtrakts eingeführten Zusatzstoffe noch zum Brennraum geleitet werden, ehe sie kondensieren könnten. Als ein weiterer Vorteil erfährt das auf der Druckseite des Turboladers eingeleitete Wasserstoff- und Sauerstoffgas eine starke Verwirbelung, wodurch eine gute Durchmischung und eine gleichmäßige Verteilung zu allen auf den Turbolader folgenden Motoreinheiten oder Zylindern erreicht wird.

Wegen hoher Sicherheitserfordernisse an Schiffen dürfen für Substanzen mit niedrigem Flammpunkt keine einwandigen Rohre verwendet werden. Doppelwandige Metallrohre stellen jedoch beträchtliche Mehrkosten dar, insbesondere bei gebogenen doppelwandigen Rohrbereichen. Erhebliche Kostenersparnisse können erreicht werden, wenn eine Heizkessel-Leitung, welche die Elektrolyseeinrichtung mit dem Heizkessel verbindet, doppelwandig ist mit einem äußeren Metallrohr und einem inneren Schlauch. Ebenso oder alternativ können die übrigen erwähnten Leitungen in dieser Weise gebildet sein. Der Schlauch kann aus Kunststoff oder einem anderen nicht metallischen Material sein. Er ist flexibel und biegsam, so dass ein Einbringen in das äußere Metallrohr leicht möglich ist. Zwischen dem äußeren Metallrohr und dem inneren Schlauch kann ein Vakuum oder Unterdruck erzeugt sein, wobei ein Drucksensor bei einer Druckänderung auf eine Undichtigkeit des Schlauchs schließen kann. Demgegenüber kann es auch vorteilhaft sein, ein Schutzgas (beispielsweise Stickstoff) zwischen dem äußeren Metallrohr und dem inneren Schlauch einzusetzen, wobei dessen Druck insbesondere höher als atmosphärischer Druck ist. Eine Steuereinheit kann den Öffnungsdruck des Regelventils so steuern, dass ein Druck in der Leitung um einen vorgegebenen Mindestwert, beispielsweise mindestens 1 bar, höher ist als der Druck des Schutzgases. Im Vergleich zu einem Unterdruck bietet das Schutzgas einen Gegendruck auf den Schlauch, wodurch dessen Durchlässigkeit reduziert wird.

Als Ansaugtrakt wird vorliegend eine Leitung oder ein Leitungssystem verstanden, welches Luft zum Brennraum führt. Ein gemeinsamer Ansaugtrakt kann ein oder mehrere Brennräume oder Verbrennungsmotoren mit Luft versorgen. Die zugeführte Luft umfasst Frischluft, das heißt Umgebungsluft, und kann weitere Bestandteile umfassen. Der Turbolader umfasst einen Verdichter, welcher im Ansaugtrakt einen Luftdruck erhöht; der gesamte Bereich stromabwärts vom Turbolader bis zum Brennraum wird als Druckseite bezeichnet. Der Turbolader umfasst zudem eine Abgasturbine, welche von einem Abgasdruck des Verbrennungsmotors angetrieben wird und hierdurch den Verdichter antreibt. Da es auf die Wirkungsweise des Turboladers vorliegend nicht näher ankommt, kann im Ansaugtrakt auch ein Kompressor anstelle des Turboladers eingesetzt werden. Als Elektrolyseeinrichtung kann eine beliebig gestaltete Vorrichtung angesehen werden, welche mit Hilfe von elektrischer Energie einen Ausgangsstoff spaltet. Der Ausgangsstoff kann vorliegend Wasser sein, worunter eine wasserhaltige Lösung zu verstehen ist. Durch die Elektrolyse werden Wasserstoff- und Sauerstoffgas erzeugt. Diese Elektrolysegase werden auf der Druckseite des Turboladers eingebracht, das heißt im Ansaugtrakt oder auch direkt in den Brennraum. Umgestaltungen des Zylinders, der den Brennraum bildet, sind aufwändig und in der Regel kostspielig; allerdings bieten Dual Fuel Motoren einen Extraanschluss, der von manchen Betreibern nicht zur Brennstoffzufuhr genutzt wird. In diesem Fall kann der Extraanschluss am Zylinderdeckel eines Dual Fuel Motors umfunktioniert und mit der Elektrolyseeinrichtung verbunden werden. Damit bei beliebigen Motoren ohne größere Umbauten eine Zufuhr von Elektrolysegasen ermöglicht wird, kann es kostengünstiger sein, die Elektrolysegase in ein Luftleitungsrohr des Ansaugtrakts einzubringen.

Die als zusätzliche Merkmale des erfindungsgemäßen Systems beschriebenen Eigenschaften ergeben bei bestimmungsgemäßer Verwendung auch Varianten des erfindungsgemäßen Verfahrens. Die Erfindung betrifft zudem eine Kombination aus dem beschriebenen Schiffsheizsystem und einem Schiffsantriebssystem, welches mindestens einen Verbrennungsmotor umfasst, mit dem die Elektrolyseeinrichtung verbunden ist.

Weitere Vorteile und Merkmale der Erfindung werden nachstehend mit Bezug auf die beigefügte schematische Figur beschrieben:

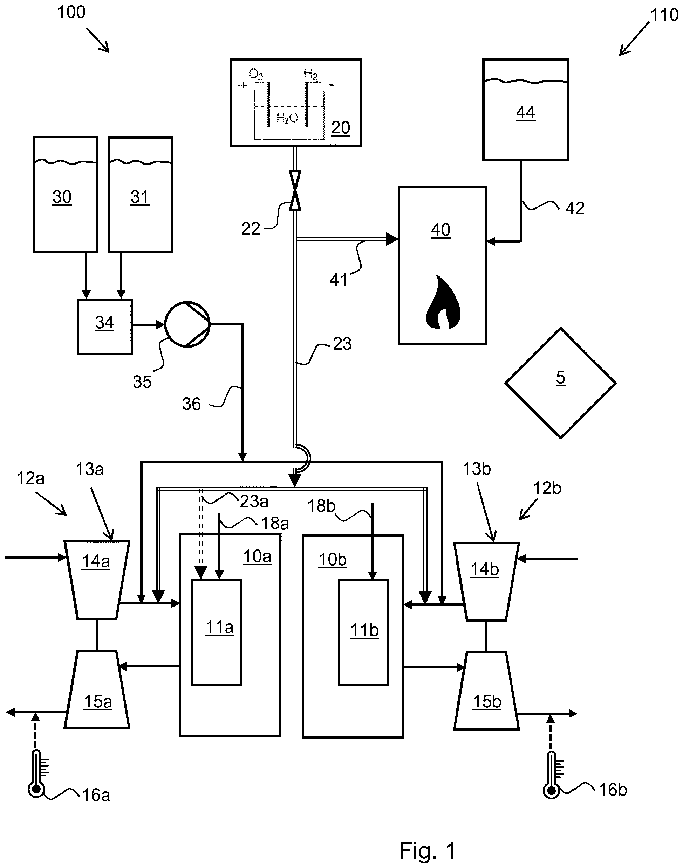

Fig. 1 ist eine schematische Darstellung eines Ausführungsbeispiels eines erfindungsgemäßen Systems.

Fig. 1 zeigt ein erfindungsgemäßes Ausführungsbeispiel mit einem Schiffsheizsystem 110, welches über eine gemeinsame Elektrolyseeinrichtung 20 mit einem Schiffsantriebsystem 100 gekoppelt ist.

Das Schiffsheizsystem 110 umfasst einen Heizkessel 40, der über eine Zufuhrleitung 42 mit Brennstoff aus einem Brennstofftank 44 versorgt wird. Bei dem Brennstoff kann es sich beispielsweise um Schweröl, Marine-Diesel- oder Gas-Öl handeln. Durch den Heizkessel 40 können beispielsweise Schiffsräume beheizt oder eine Warmwasserversorgung bereitgestellt werden. Bei herkömmlichen Heizkesseln werden durch die Verbrennung des Brennstoffs beträchtliche Rußmengen erzeugt. Dies wird erfindungsgemäß vermieden, indem Wasserstoffgas und Sauerstoffgas hinzugegeben werden, was eine vollständigere Verbrennung bewirkt. Wasserstoffgas und Sauerstoffgas werden durch eine Elektrolyseeinrichtung 20 erzeugt. Eine eigene Elektrolyseeinrichtung nur für einen Heizkessel wäre aufgrund der beschränkten Nutzung des Heizkessels und wegen der durch Sicherheitserfordernisse hohen Kosten einer Elektrolyseeinrichtung kaum rentabel. Allerdings kann die Elektrolyseeinrichtung 20, die für das Schiffsantriebssystem 100 verwendet wird, für den Heizkessel 40 mitgenutzt werden.

Das Schiffantriebssystem 100 umfasst einen oder mehrere Verbrennungsmotoren 10a, 10b, denen über jeweilige Treibstoffleitungen 18a, 18b ein (fossiler) Treibstoff zugeführt wird. Die Verbrennungsmotoren 10a, 10b können beispielsweise Einheiten einer Hauptmaschine, eine Hauptmaschine und eine/mehrere Hilfsmaschinen, oder Einheiten einer oder mehrerer Hilfsmaschinen des Schiffantriebssystems 100 sein.

Jeder Verbrennungsmotor 10a, 10b umfasst mindestens einen Brennraum 11a, 11b sowie einen Ansaugtrakt, 12a, 12b, über den Frischluft in den Brennraum 11a, 11b geleitet wird. Zudem ist jeweils ein Turbolader 13a, 13b vorgesehen, welcher eine Abgasturbine 15a, 15b und einen Verdichter 14a, 14b umfasst. Die Abgasturbinen 15a, 15b werden vom Druck des Abgases angetrieben, welcher durch Verbrennung des Treibstoffs in den Brennräumen 11a, 11b entsteht. Die Abgasturbinen 15a, 15b treiben die jeweiligen Verdichter 14a, 14b an, sodass die Frischluft im Ansaugtrakt 12a, 12b komprimiert wird. Dabei wird sie als Ladeluft bezeichnet.

Der Verbrennungsprozess des Treibstoffs sollte möglichst effizient erfolgen und wenig Schadstoffe erzeugen. Zu diesem Zweck werden elektrolytisch erzeugtes Wasserstoff- und Sauerstoffgas sowie Wasser und Alkohol (beispielsweise Methanol) zugeführt, was nachfolgend näher beschrieben wird.

Wasser und Alkohol werden aus einem Wassertank 31 und einem Alkoholtank 30 entnommen und in einem Mischungsbehälter 34 gemischt. Anschließend befördert eine Druckpumpe 35 das Gemisch über ein Wasser-Alkohol-Leitungsrohr 36 in den Ansaugtrakt 12a, 12b, nämlich in einen Druckbereich stromabwärts vom Verdichter 14a, 14b. Die Einleitung hinter dem Verdichter 14a, 14b hat im Vergleich zu einer Einleitung vor dem Verdichter 14a, 14b den Vorteil, dass Ladeluft besser gekühlt wird und dadurch der Verdichter 14a, 14b größere Luftmengen befördern kann. Geringere Verbrennungstemperaturen sind zudem förderlich zur Reduzierung von Stickoxiden, die durch die Verbrennung entstehen.

Indem getrennte Tanks 30, 31 für Wasser und Alkohol vorgesehen sind, kann das Mischungsverhältnis variabel verändert werden. Zudem wird durch den Mischungsbehälter 34 das Problem umgangen, dass Emulsionen aus Wasser und Alkohol eine beschränke Langzeitstabilität haben. Als weiterer Vorteil ist aufgrund des Mischungsbehälters 34 nur eine einzige Druckpumpe 35 erforderlich. Da der Alkoholtank 31 sowie Leitungen und eventuelle Pumpen, die den Alkohol transportieren, wegen der leichten Entzündbarkeit des Alkohols hohen Sicherheitsanforderungen unterliegen, stellt es eine relevante Kostenersparnis ein, wenn eine einzige Druckpumpe 35 genügt.

Die Elektrolyseeinrichtung 20 kann eine prinzipiell beliebige Anzahl an Elektrolysezellen umfassen, welche unter Nutzung elektrischer Energie Wasser oder eine wässrige Lösung zu insbesondere Wasserstoffgas und Sauerstoffgas spalten. Die erzeugten Elektrolysegase (Wasserstoffgas und Sauerstoffgas) werden über eine Elektrolysegas-Leitung 23 dem Ansaugtrakt 12a, 12b zugeführt, ebenfalls im Druckbereich hinter dem Verdichter 14a, 14b.

Indem die Elektrolysegase sowie das Wasser-Alkohol-Gemisch stromabwärts vom Verdichter 14a, 14b zugegeben werden, wird eine höhere Sicherheit erreicht. So könnte es bei Fehlern oder Beschädigungen zu Flammenrückschlägen aus dem Brennraum 11a, 11b in den Ansaugtrakt 12a, 12b kommen. Wegen der leichten Entzündlichkeit von Alkohol und Wasserstoffgas könnten sich Flammen weiter ausbreiten. Der Ansaugtrakt 12a, 12b ist zum Ansaugen von Frischluft geöffnet, beispielsweise zu einem Maschinenraum, in dem sich Menschen aufhalten können. Das Risiko, dass sich Flammen über den brennbaren Wasserstoff und Alkohol bis in den Maschinenraum ausbreiten, wird dadurch stark reduziert, dass eine Einleitung dieser Substanzen erst kurz vor der Brennkammer erfolgt und eine Trennung zum Maschinenraum auch durch den Verdichter 14a, 14b vorliegt.

Eine Ausführungsvariante ist durch eine gestrichelt dargestellte Leitung 23a gezeigt. Durch die Leitung 23a können Elektrolysegase direkt in den Brennraum 11a geleitet werden, anstelle einer Einleitung im Ansaugtrakt. Dies kann insbesondere sinnvoll sein, wenn an einem Zylinderdeckel des Verbrennungsmotors 10a, 10b ein ansonsten ungenutzter Anschluss vorhanden ist, was bei Dual Fuel Motoren der Fall sein kann, bei denen aber bloß einer der beiden Anschlüsse für eine Treibstoffzufuhr genutzt wird.

Aus Sicherheitsgründen sind doppelwandige Rohre für die hier beschriebenen Leitungen 23, 36, 41 erforderlich. Doppelwandige Rohre mit zwei Metallwänden sind mit hohen Kosten verbunden, welche vermieden werden können, wenn nur eine Außenwand durch Metall gebildet ist und eine Innenwand als Schlauch durch hauptsächlich nicht-metallische Materialien gebildet ist.

Um die signifikanten Kosten einer Druckpumpe zum Befördern der Elektrolysegas zu vermeiden, kann die Elektrolyseeinrichtung 20 als Druckkammer gestaltet sein. Es ist ein Regelventil 22 vorhanden, welches einen Auslass für Elektrolysegase nur dann freigibt, wenn in der Elektrolyseeinrichtung 20 durch die erzeugten Gase ein Öffnungsdruck erreicht ist.

Die Elektrolysegase Sauerstoff und Wasserstoff können gemeinsam als Knallgas in einer einzigen Leitung befördert werden. Alternativ kann die Elektrolyseeinrichtung 20 auch so gestaltet sein, dass Sauerstoffgas und Wasserstoffgas getrennt über separate Leitungen entnehmbar sind. Hierbei kann pro Leitung ein Regelventil vorhanden sein.

Eine getrennte Zugabe von Sauerstoffgas und Wasserstoffgas erlaubt ein variabel einstellbares Verhältnis zwischen diesen.

Durch die Zugabe von Sauerstoffgas, Wasserstoffgas, Alkohol und Wasser kann die Effizienz der Verbrennung gesteigert werden. Hierbei sind die Verhältnisse zwischen diesen Zusatzstoffen sowie ihre Gesamtmengen relevant. Ideale Werte dieser Größen hängen von verschiedenen Parametern ab. Deshalb ist eine Steuereinheit 5 vorhanden, welche die Verhältnisse und Mengen der genannten Zusatzstoffe variabel einstellt. Hierzu steuert die Steuereinheit die Elektrolyseeinrichtung 20, insbesondere eine Wasserzufuhr und/oder eine elektrische Leistungsaufnahme der Elektrolyseeinrichtung 20, sowie die Druckpumpe 35 und das mindestens eine Regelventil 22. Die Steuereinheit 5 empfängt ein Treibstoffsignal, welches angibt, was für ein Treibstoff momentan in den Brennräumen 11a, 11b verbrannt wird. Bei einem Wechsel des Treibstoffs ändert die Steuereinheit 5 auch das Verhältnis der vorgenannten Zusatzstoffe. Zudem werden eine Abgastemperatur über Abgastemperatursensoren 16a, 16b erfasst. Je höher die Abgastemperatur ist, desto mehr Wasser und/oder Alkohol können zu Kühlzwecken in den Ansaugtrakt eingesprüht werden. Zudem kann die Steuereinheit 5 variabel einstellen, wie viele und welche der Verbrennungsmotoren 10a, 10b mit den Zusatzstoffen versorgt werden. Da sich die Verbrennungsmotoren 10a, 10b in ihrem Aufbau unterscheiden können, kann es auch sinnvoll sein, das Verhältnis der Zusatzstoffe zu ändern, wenn andere der mehreren Verbrennungsmotoren betrieben werden.

Die Steuereinheit 5 kann einstellen, in welchem Verhältnis erzeugte Elektrolysegase zu den Verbrennungsmotoren 10a, 10b und zum Heizkessel 40 aufgeteilt werden. Dies ist auch deshalb besonders attraktiv, weil der Heizkessel 40 oftmals umso stärker betrieben wird, je schwächer die Verbrennungsmotoren 10a, 10b laufen. Dies ist dadurch begründet, dass der Heizkessel 40 gerade dann benötigt wird, wenn die Verbrennungsmotoren 10a, 10b nicht genügend Abwärme bereitstellen. Daher kann der Heizkessel 40 durch Elektrolysegase mitversorgt werden, ohne dass die Elektrolyseeinrichtung 20 hierdurch größer oder wesentlich teurer gestaltet werden müsste.

## Patentansprüche

1. Schiffsheizsystem umfassend
mindestens einen Heizkessel (40) und
mindestens einen Brennstofftank (44) zum Versorgen des Heizkessels (40) mit Brennstoff,
**dadurch gekennzeichnet,**
**dass** eine Elektrolyseeinrichtung (20) zum Erzeugen von Wasserstoffgas und Sauerstoffgas vorgesehen und mit einem Verbrennungsmotor (10a, 10b) eines Schiffsantriebssystems verbunden ist, und
**dass** die Elektrolyseeinrichtung (20) außerdem mit dem Heizkessel (40) verbunden ist zum Zuführen von Wasserstoffgas und Sauerstoffgas zum Heizkessel (40).

2. Schiffsheizsystem nach Anspruch 1,
**dadurch gekennzeichnet,**
**dass** eine Steuereinheit (5) vorgesehen und dazu eingerichtet ist, variabel einzustellen, wieviel erzeugtes Wasserstoffgas und Sauerstoffgas dem Verbrennungsmotor (10a, 10b) zugeführt wird und wieviel erzeugtes Wasserstoffgas und Sauerstoffgas dem Heizkessel (40) zugeführt wird.

3. Schiffsheizsystem nach Anspruch 2,
**dadurch gekennzeichnet,**
**dass** die Steuereinheit (5) eine Datenschnittstelle zum Empfangen eines Brennstoffsignals umfasst, welches angibt, was für ein Brennstoff dem Heizkessel (40) momentan zugeführt wird, und zum Empfangen eines Heizleistungssignals, welches eine momentane Heizleistung des Heizkessels (40) angibt,
**dass** die Steuereinheit (5) dazu eingerichtet ist, eine Menge an Wasserstoffgas und Sauerstoffgas, welche dem Heizkessel (40) zugeführt werden, abhängig vom Heizleistungssignal und vom Brennstoffsignal variabel einzustellen.

4. Schiffsheizsystem nach Anspruch 2 oder 3,
**dadurch gekennzeichnet,**
**dass** die Elektrolyseeinrichtung (20) so gestaltet ist, dass erzeugtes Sauerstoffgas und erzeugtes Wasserstoffgas in separaten Heizkessel-Leitungen (41) entnehmbar sind, und
**dass** die Steuereinheit (5) dazu eingerichtet, ein Verhältnis zwischen einer dem Heizkessel (40) zugeführten Sauerstoffgasmenge und einer dem Heizkessel (40) zugeführten Wasserstoffgasmenge variabel einzustellen.

5. Schiffsheizsystem nach einem der Ansprüche 1 bis 4,
**dadurch gekennzeichnet,**
**dass** die Elektrolyseeinrichtung (20) als Druckkammer gebildet ist und ein Regelventil (22) umfasst, welches eine Verbindung zum Heizkessel (40) nur öffnet, wenn ein Druck in der Elektrolyseeinrichtung (20) einen einstellbaren Öffnungsdruck überschreitet, wobei das Wasserstoffgas und Sauerstoffgas allein durch den in der Elektrolyseeinrichtung (20) erzeugten Druck und durch keine zusätzliche Pumpe zum Heizkessel (40) befördert werden.

6. Schiffsheizsystem nach einem der Ansprüche 1 bis 5,
**dadurch gekennzeichnet,**
**dass** in einem Ansaugtrakt (12a, 12b) des Verbrennungsmotors (10a, 10b) ein Verdichter (14a, 14b) eines Turboladers (13a, 13b) angeordnet ist und dass eine Elektrolysegas-Leitung (23) die Elektrolyseeinrichtung (20) mit einem Druckbereich hinter dem Verdichter (14a, 14b) verbindet.

7. Schiffsheizsystem nach einem der Ansprüche 2 bis 6,
**dadurch gekennzeichnet,**
**dass** die Steuereinheit (5) dazu eingerichtet ist, den einstellbaren Öffnungsdruck des Regelventils (22) auf einen Druck einzustellen, welcher einen Ladeluftdruck im Druckbereich hinter dem Verdichter (14a, 14b) überschreitet, so dass das Wasserstoffgas und Sauerstoffgas allein durch den in der Elektrolyseeinrichtung (20) erzeugten Druck und durch keine zusätzliche Pumpe in den Druckbereich hinter dem Verdichter (14a, 14b) befördert werden.

8. Schiffsheizsystem nach einem der Ansprüche 5 bis 7,
**dadurch gekennzeichnet,**
**dass** die Steuereinheit (5) dazu eingerichtet ist, den Öffnungsdruck des Regelventils (22) abhängig von einem momentanen Ladeluftdruck hinter dem Turbolader (13a, 13b) variabel einzustellen.

9. Schiffsheizsystem nach einem der Ansprüche 3 bis 7,
**dadurch gekennzeichnet,**
**dass** eine Heizkessel-Leitung (41), welche die Elektrolyseeinrichtung (20) mit dem Heizkessel (40) verbindet, doppelwandig ist mit einem äußeren Metallrohr und einem inneren Schlauch.

10. Schiffsheizsystem nach Anspruch 9,
**dadurch gekennzeichnet,**
**dass** sich ein Schutzgas zwischen dem äußeren Metallrohr und dem inneren Schlauch befindet, dessen Druck höher als atmosphärischer Druck ist, und dass das Regelventil (22) so eingestellt ist, dass dessen Öffnungsdruck mindestens 1 bar höher ist als der Druck des Schutzgases.

11. Verfahren zum Betreiben eines Schiffsheizsystems,
wobei das Verfahren die folgenden Schritte umfasst:
Zuführen von Brennstoff aus einem Brennstofftank (44) in mindestens einen Heizkessel (40) und
Verbrennen des Brennstoffs im Heizkessel (40),
**gekennzeichnet durch** die folgenden Schritte:
Erzeugen von Wasserstoffgas und Sauerstoffgas mit einer Elektrolyseeinrichtung (20) und
Zuführen des erzeugten Wasserstoffgases und Sauerstoffgases zu einem Verbrennungsmotor (10a, 10b) eines Schiffsantriebssystems und zu dem Heizkessel (40).
